# EUROPEAN PATENT SPECIFICATION

(11) **EP 3 427 889 B1**
(45) Date of publication and mention of the grant of the patent: **24.02.2021**
(21) Application number: 17181560.8
(22) Date of filing: 14.07.2017
(51) Int. Cl.: C22C 29/12, C22C 5/06, B23K 35/30, B23K 35/00, B23K 35/02, H01M 8/0282, H01M 8/124, H01M 8/0286, B23K 1/008, B23K 1/19, B23K 103/00, B23K 103/02, B23K 103/08, B23K 103/18, B22F 1/00, C22C 1/05, C22C 32/00, C22C 1/04

(54) **AIR BRAZE FILLER MATERIAL FOR CERAMIC METALLIZATION AND BONDING, AND METHOD FOR METALLIZATION AND BONDING OF CERAMIC SURFACES**
LUFTLÖTUNGSFÜLLMATERIAL FÜR METALLISIERUNG UND VERBINDUNG VON KERAMIKEN SOWIE VERFAHREN ZUR METALLISIERUNG UND VERBINDUNG VON KERAMISCHEN OBERFLÄCHEN
MATÉRIAU D'APPORT DE BRASAGE SOUS AIR POUR MÉTALLISATION ET COLLAGE DE CÉRAMIQUES ET PROCÉDÉ DE MÉTALLISATION ET DE LIAISON DE SURFACES CÉRAMIQUES

(43) Date of publication of application: 16.01.2019
(73) Proprietor: Ansaldo Energia IP UK Limited, London W1G 9DQ (GB)
(72) Inventor: BOSSMANN, Hans-Peter, 79787 Lauchringen (DE); RENUSCH, Daniel, 5400 Baden (CH); CHU, Tsu-Te, 6004 Luzern (CH); IVAS, Toni, 8051 Zürich (CH); ELSENER, Hans Rudolf, 6340 Baar (CH)
(74) Representative: Cernuzzi, Daniele

(56) References cited:
- EP-A2- 2 117 765
- CN-A- 101 288 928
- US-A1- 2013 193 194
- WEIL ET AL: "The effect of TiO"2 on the wetting behavior of silver-copper oxide braze filler metals", SCRIPTA MATERIA, ELSEVIER, AMSTERDAM, NL, vol. 54, no. 6, 1 March 2006 (2006-03-01), pages 1071-1075, XP005250869, ISSN: 1359-6462, DOI: 10.1016/J.SCRIPTAMAT.2005.12.003

## Description

### FIELD OF THE INVENTION

The present invention relates to reactive air braze filler materials for ceramic metallization and bonding.

In particular, the invention relates to improved compositions of reactive air braze filler materials suitable to be used to metallize and join ceramic components, such as tiles, in gas turbines, for example to provide effective thermal protection.

The invention also relates to a method for metallization and bonding of ceramic surfaces, in particular for joining a first ceramic surface to a second ceramic or metallic surface.

### DESCRIPTION OF PRIOR ART

In many technical field, for example in the gas turbine field, it is well known the need for an effective thermal protection of components/surfaces operating at very high temperatures and also exposed to particularly aggressive environments, which subjects the components to high levels of stress, not only thermal but also corrosive and mechanical.

A known kind of high temperature TPS (thermal protection systems) is based on the use of ceramic materials, for example in the form of covering tiles applied onto metal or ceramic components.

Brazing is a well-known joining process to bond ceramic (for example, ceramic tiles) on metal or other ceramic surfaces.

In brazing, two pieces of metal or some selected other materials are joined together by melting and flowing a braze filler into the joint.

In particular, air brazing is a bonding procedure in which ceramic-ceramic and ceramic-metal pieces are joined by application of a braze filler in air, so avoiding to operate in a shielding gas atmosphere or under vacuum conditions and thus reducing production costs associated with the joining operation.

Recently, so-called "reactive air brazing" (RAB) techniques have been developed, which utilize metal-/metal oxide-based braze fillers. For examples, braze fillers for air brazing are known which comprise noble metals (such as Ag) and copper oxides (CuOₓ).

RAB joints typically exhibit excellent mechanical properties, thermal cycling performance and long-term stability also in high-temperature oxidizing conditions.

However, especially in the gas turbine field, known materials and techniques are not fully satisfactory.

Brazing of ceramic (on either ceramic or metal surfaces) suitable for gas turbine operation conditions poses in fact specific problems.

In particular, wetting of ceramic is a key factor for achieving an effective and long-lasting bond. Additional to wetting, also excellent oxidation resistance and bonding strength are required.

EP2117765 discloses a method for joining together two or more ceramic and/or metal parts by providing a braze consisting of a mixture of copper oxide, silver, and ceramic particulate possibly including another oxide, in particular NiO or CeO₂. The addition of the ceramic particulate increases the viscosity of the braze, decreasing squeeze out, decreasing the formation of air pockets, decreases the formation of brittle phases by providing nucleation sites and increases the flexural strength of the joint.

Also CN101288928, and US20130193194 disclose braze materials containing silver and two metal oxides.

Weil et al. "The effect of TiO2 on the wetting behavior of silver-copper oxide braze filler metals", discloses silver-copper oxide ceramic brazing alloys compositionally modified by doping with small amounts of titania. In some embodiments, the braze material incudes silver and two metal oxides.

### DISCLOSURE OF THE INVENTION

Accordingly, it is an object of the present invention to provide an air braze filler material for ceramic metallization and bonding suitable for overcoming the problem foregoing described of the prior art.

In particular, it is an object of the present invention to provide a material having improved properties and performances compared with traditional reactive air braze fillers, so as to be also suitable to be used in thermal protection of gas turbine components.

The present invention accordingly relates to an air braze filler material for ceramic metallization and bonding as defined in Claim 1, and to a method for metallization and bonding of ceramic surfaces as defined in Claim 5.

Advantageous preferred features of the invention are the subject matter of the dependent claims.

Basically, the invention provides an improved air braze filler material for metallization and bonding of ceramic surfaces/components.

The material of the invention is suitable to be used on a wide range of ceramic surfaces (e.g. Al₂O₃, AlN, SiC) to provide excellent ceramic-ceramic and ceramic-metal joints.

The material of the invention can also be used as a metallization layer, in a pre-treatment metallization step followed by a brazing step performed with traditional braze fillers, also conventional non-active braze fillers.

The material of the invention provides superior wetting behavior as compared with conventional air-brazing fillers.

Thus, ceramic-ceramic and ceramic-metal joints produced using the reactive air braze filler material of the invention exhibit superior wettability as compared to commercially available air-brazed joints.

Moreover, the material of the invention exhibits improved oxidation resistance, superior bond strength and gas impermeability, and long-term stability even in oxidizing atmospheres at elevated temperatures (above 800°C) .

The materials of the invention are therefore particularly suitable to be used for brazing high-temperature components, for example in gas turbines, as well as sealing materials for example in solid-oxide fuel cells (SOFC), gas separators, oxide membranes, sensors, thermal protection systems, etcetera.

The reactive air braze filler materials of the invention can be easily processed and applied in the form of a paste, paint, slurry, ink, etcetera; or in the form of a solid piece, in particular a foil, sheet, wire, etcetera.

Due to the improved wetting behavior on ceramic surfaces, the material of the invention is particularly suitable for use as a metallization layer and also allows the fabrication of hermetic seals between dissimilar materials.

Broadly speaking, the reactive air braze filler material of the invention is a metal-ceramic mixture comprising at least one noble metal in an amount ranging between 50 and 90 mol%, and a solid mixture of two metal oxides in an amount ranging between 10 and 50 mol%.

According to the invention, the reactive air braze filler material of the invention is a ternary alloy system having the general composition:

a M - b R'Oₓ - c R"O_{y}

where:
M is silver metal (Ag);
R'Oₓ is a copper oxide CuOₓ (i.e. R' is Cu);
R"O_{y} is a CoO_{y} (i.e. R" is Co);
a, b, c are the respective mole fractions of M, R'Oₓ, R"O_{y};
x, y are the respective numbers of oxygen atoms in the oxides R'Oₓ, R"O_{y}.

According to the invention the first metal oxide is a copper oxide CuOₓ, where x ranges between 0.5 and 1; and the second metal oxide is CoO_{y}, where y is 1.0.

According to the invention, a braze filler containing Ag and a copper oxide is greatly improved by addition of one second reactive metal oxide of Co), resulting in surprisingly improved performance, in particular in term of increased wettability of ceramic surfaces.

The invention thus provides an improved method for metallization and bonding of ceramic surfaces, in particular for joining a first ceramic surface to a second ceramic or metallic surface.

Basically, the method of the invention comprises the steps of:
- preparing a reactive air braze filler material as previously described;
- applying the reactive air braze filler material onto a first ceramic surface;
- joining the first ceramic surface to a second ceramic or metal surface by brazing.

According to an aspect of the invention, the reactive air braze filler material is used to form a thin metallization layer on a ceramic surface.

To apply the material of the invention as a metallization layer, selected quantities of the material constituents (the noble metal Ag; and the two oxides R'Oₓ, R"O_{y}) in the form of powders are mixed together with at least one solvent, plasticizer or binder to obtain a paste, a screen print ink, a paint or a spray slurry, which can be homogeneously distributed as a thin layer (with a thickness of about 10-50 µm, preferably of about 20 µm or less) on the surface of the ceramic component to treat.

The filler material of the invention thus contains additives, so as to form a paste, paint, slurry or ink; in particular, the filler of the invention contains at least one binder, in particular an organic binder such as a polyvinyl alcohol based organic binder or a cellulose based organic binder; and/or at least one solvent and/or at least one plasticizer.

After applying the reactive air braze filler material onto the ceramic surface to form the metallization layer, to activate the chemical bonding of the reactive air braze filler material with the ceramic base component the metallized ceramic part is advantageously pre-heated to a selected temperature T1 ranging between about 800°C and 1300°C, preferably between about 950°C and 1050°C, for example by using a tube furnace operating in air.

After the pre-treatment/pre-heating of the metallized ceramic surfaces, joining of the pre-treated ceramic components can be performed using a wide variety of conventional braze filler alloys, such as Ag-based (CB6, Ag-28Cu, Incusil-15, Incusil-10, Ag-21Cu-25Pd) and Cu-based braze fillers.

According to another aspect of the invention, the reactive air braze filler material is used in a brazing step, to form a ceramic-ceramic or a ceramic-metal joint.

In this case, the reactive air braze filler material is applied, for example in the form of paste, paint, slurry, ink, etcetera, to a first ceramic surface, possibly pre-treated as described above to be provided with a metallization layer, to form a brazing layer, preferably having a thickness of about 100-300 µm.

In other embodiments, the reactive air braze filler material of the invention is in the form of a solid piece, in particular a foil, sheet or wire. And the reactive air braze filler material is used in the brazing step in form of foil, sheet, wire, etcetera.

The brazing step is advantageously performed at a temperature ranging between about 800°C and 1300°C, preferably between about 950°C and 1050°C, so as to activate the chemical bonding of the reactive air braze filler material with the ceramic base component.

The materials of the invention can be advantageously prepared by oxidation of metallic powders of the metals M (Ag), R' (Cu) and R" (Co) in a preliminary heat-treatment process performed directly in-situ (i.e. on the ceramic surface to treat and join), to form in-situ the ternary alloy system M-R'Oₓ-R"O_{y}.

### BRIEF DESCRIPTION OF DRAWINGS

The invention is further described by way of example in the following non-limiting embodiments, with reference to the accompanying drawings in which:
- Figure 1 is a diagram showing a DSC (differential scanning calorimetry) curve of a reactive air braze filler material according to the invention;
- Figure 2 shows a photograph of two ceramic surfaces treated respectively with (a) a conventional air braze filler and (b) a reactive air braze filler material according to the invention;
- Figure 3 is an XRD (x-ray diffraction) spectrum recorded from a metallized ceramic substrate treated with a reactive air braze filler material according to the invention;
- Figure 4 is a BSE-SEM (backscatter electron - scanning electron microscopy) image recorded from a metallized ceramic substrate treated with a reactive air braze filler material according to the invention.
- Figure 5 is a cross sectional secondary electron micrograph of an interface between a ceramic substrate and a brazed zone, treated with a reactive air braze filler material according to the invention.

### DETAILED DESCRIPTION OF PREFERRED EMBODIMENTS OF THE INVENTION

Exemplary materials were produced by weighting specific amounts of silver, copper oxide and cobalt oxide powders and specifically:
Ag: 50-90 mol%
CuOₓ: 5-45 mol%
CoO_{y}: 5-45 mol%

In other words, ternary systems a Ag - b CuOₓ - c CoO_{y} were prepared with:
a = 50-90, preferably 60-80, for example about 70
b = 5-45, preferably 10-30, for example about 20
c = 5-45, preferably 5-15, for example about 10

The components in powder form were mixed to prepare solid mixtures (>99.9%, 325 mesh).

In particular, an exemplary material was prepared having the following composition:

a Ag - b CuOₓ - c CoO_{y}

where:
x = 1; y = 1
a = 70, b = 20, c = 10.

Samples of the exemplary material were investigated by thermal analysis, using a high-temperature DCS apparatus operating in dry argon atmosphere under flowing conditions.

The material samples were heated by increasing the temperature at a rate of 10°C/min up to 1100°C and subsequently cooled down to room temperature at the same rate.

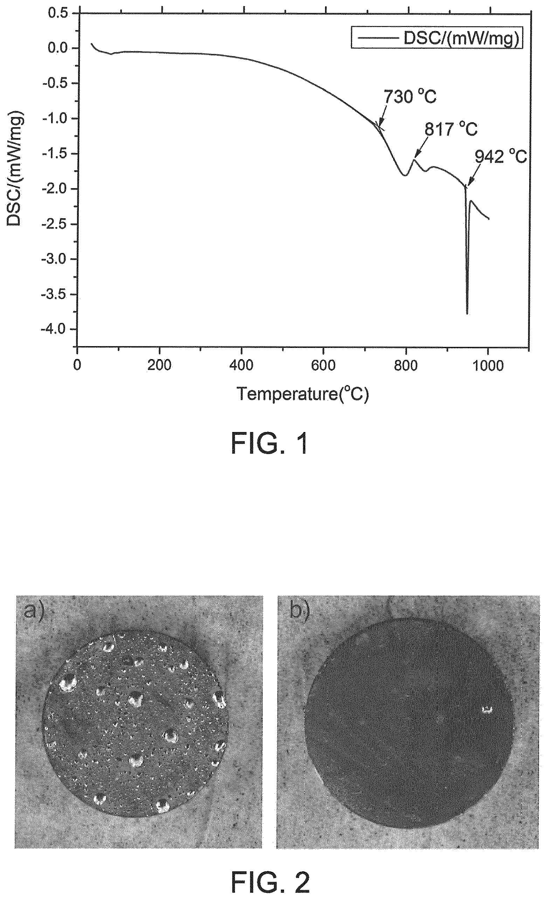

In particular, Figure 1 shows the DSC curve of the exemplary material.

Notably, the DSC analysis did not show evidence of the expected monotectic reaction L2 + O₂ → CuO + L1, where L1 and L2 denote the Ag-rich and Cu-rich liquid phases respectively.

Indeed, above the monotectic temperature, Cu exists as a mixture of Cu₂O and CuO (i.e. CuOₓ where x = 0.5, 1).

A first endothermic peak would assigned if this reaction would occur:

Co₃O₄ → 3CoO + 1/2 O₂

The second peak is assigned to the formation of a mixed oxide CuO/CoO and the third peak is assigned to eutectic melting.

Some samples of the exemplary material (having the above composition) were also added with known additives to form pastes, which were then homogeneously distributed on ceramic surfaces of alumina and yttria stabilized zirconia (YSZ) to form thin metallization layers having a thickness of about 20 µm or lower.

The wetting behavior of such samples on ceramic surfaces was investigated by subjecting the metallized ceramic surfaces to a heat treatment in an air furnace according to the same temperature cycle of the aforementioned DSC analysis.

For comparison, identical ceramic surfaces were metallized using a conventional Ag-Cu020 braze filler (i.e. a binary system consisting of 80 mol% silver metal and 20 mol% CuO) and then subjected to the same heat treatment in air.

A comparison of the different wetting behaviors of the invention material and the conventional non active braze filler on the YSZ surfaces, as analyzed by SEM, is shown in Figure 2.

Figure 2 compares two micro-photographs of ceramic surfaces (specifically made of YSZ - 5 mol% HfO₂) treated respectively with (a) a conventional air braze filler (specifically, Ag-CuO with 20 mol% CuO) and (b) a ternary reactive air braze filler material according to the invention (Ag-CuO-CoO, with 20 mol% CuO and 10 mol% CoO). The metallized ceramic surfaces were heat-treated in an air furnace at 1050°C for 10 min.

Wettability of the invention material (including CoO in addition to Ag and CuO) proved to be superior as compared with standard (non-reactive) Ag-CuO air braze filler.

Phase evolution of the materials according to the invention on ceramic surfaces during heat treatment in air was investigated by X-ray diffraction (XRD) analysis and Energy Dispersive X-ray (EDX) analysis of pre-heated metallized ceramic surfaces.

The combined XRD and EDX analysis detected the presence of YSZ (i.e. the substrate) and silver (i.e. the matrix of the reactive air braze filler material) with a small amount of Co₃O₄ and a mixed solid-solution oxide phase of (Cu,Co)O, presumably Cu₂CoO₃.

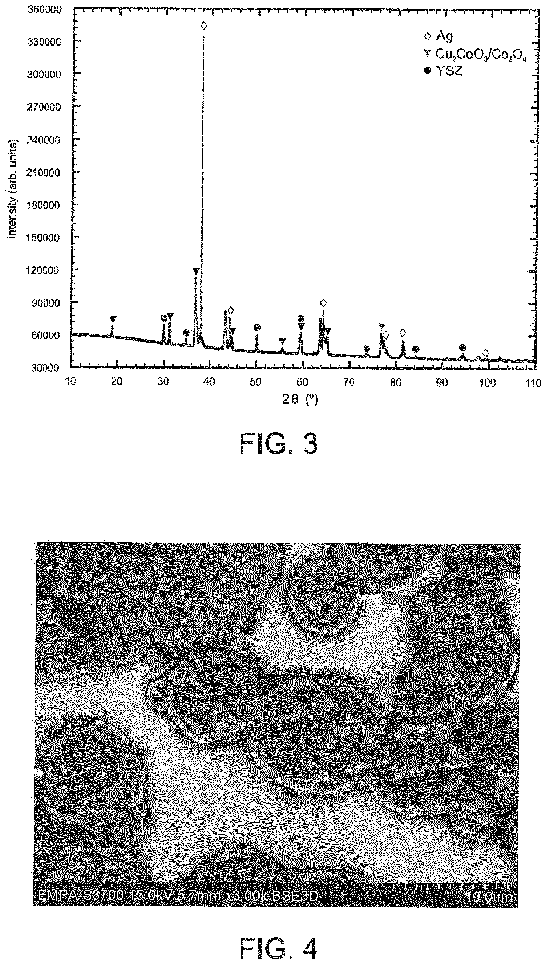

For example, Figure 3 is a XRD diffractogram recorded from an YSZ substrate, metallized by the invention exemplary material Ag-CuO-CoO having 20 mol% CuO and 10 mol% CoO, after heat-treatment at 1050°C for 10 min in air.

The Co₃O₄ and Cu₂CoO₃ phases are isomorphic and, therefore, difficult to distinguish by XRD. EDX analysis confirms the presence of a mixed solid-solution oxide phase of (Cu,Co)0 at the pre-heated surface of metallized YSZ substrate: a corresponding backscattered electron image of the (Cu,Co)O phase inside the Ag matrix is shown in Figure 4.

Figure 4 shows a BSE-SEM image recorded from a YSZ substrate, metallized by Ag-CuO-CoO (20 mol% CuO, 10 mol% CoO), after heat-treatment at 1050°C for 10 min in air. EDX analysis confirmed the presence of a mixed solid-solution oxide phase of (Cu,Co)O (dark particles in Figure 4) in the Ag matrix (white area in Figure 4).

High-temperature oxidation resistance of pre-heated metallized ceramic surfaces (metallized by materials of the invention) was investigated at a temperature of 900°C using a standard air muffle furnace.

It was detected that brazed samples, treated according to the invention, substantially maintain their weight, as measured over an oxidation period of 1600 hours, i.e. there is no appreciable loss of material from the metallization layer, indicating long-term stability of the materials even in oxidizing environments at high temperatures.

Finally, the brazing performance of the reactive air braze filler materials of the invention was also investigated, in comparison with conventional braze fillers.

In particular, metallized ceramic components, pre-treated with the invention materials and pre-heated at a first temperature T1 (ranging between about 800°C and 1300°C, preferably between about 950°C and 1050°C), were then joined by brazing to metal or ceramic components using commercially available air-braze fillers, in particular an Ag-based braze filler. To this purpose, Ag-based filler foils were placed between the metallized ceramic surfaces (pre-treated according to the invention) and the metal or ceramic parts and heated up in an air-furnace up to a second temperature T2 (preferably lower than T1, however depending on the air-braze filler used, for example 1025°C).

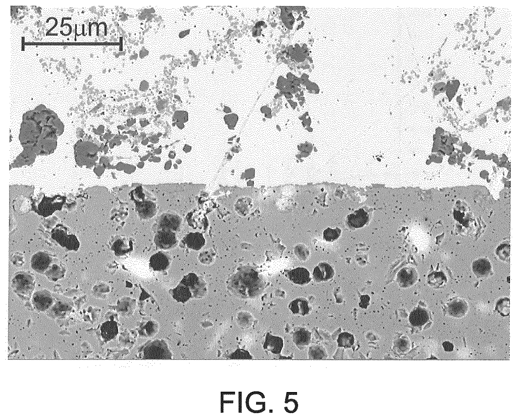

An exemplary cross-sectional secondary electron micrograph of the interface area between a reactive air braze filler material and a ceramic substrate is shown in Figure 5.

In particular, Figure 5 shows an interfacial zone made of (Cu,Co)O precipitates (and, depending on the composition of the specific air braze filler employed, also some CuOₓ and CoO_{y} precipitates) in an Ag-rich matrix, substantially without any remaining porosity. The large white regions are made the silver-rich phase, while the darker regions are the mixed oxide phases of Cu and possibly Co.

Other samples were instead brazed by using reactive air braze filler materials according to the invention in the brazing step, obtaining similar good results.

Further samples were prepared and tested as described above, changing the components and their amount, and obtaining a similar behavior in term of improved wetting behavior on ceramic substrates as compared to conventional Ag-Cu-based air braze fillers.

It is deemed that during reactive air brazing with the materials of the invention, the mixed solid-solution oxide phase of (Cu,Co)O precipitates out of the eutectic Ag-Cu-O liquid phase and the reactive oxide (R"O_{y}) thus takes oxygen from the eutectic melt. This apparently results in an increased wettability of the complete brazing system, which might relate to a lower surface tension of the eutectic melt.

Similar characteristics are shown in fact by other reactive oxides of transition metal, such as CeO₂, which have an oxygen buffer capability and release oxygen during melting of the reactive air braze filler material.

Finally, although the invention has been explained in relation to the above-mentioned preferred embodiments, it is to be understood that many other possible modifications and variations can be made which however do not go beyond the scope of the appended claims.

## Claims

1. Reactive air braze filler material, comprising a metal-ceramic mixture, **characterized in that** the metal-ceramic mixture consists of
Ag: 50-90 mol%;
CuOₓ: 5-45 mol%;
CoO_{y}: 5-45 mol%
where x ranges between 0.5 and 1.0; and y is 1.0.

2. Material according to Claim 1, comprising one or more additives so as to form a paste, paint, slurry or ink.

3. Material according to Claim 2, comprising at least one binder; and/or at least one solvent and/or at least one plasticizer.

4. Material according to Claim 1, in the form of a foil, sheet or wire.

5. Method for metallization and bonding of ceramic surfaces, in particular for joining a first ceramic surface to a second ceramic or metallic surface; the method comprising the steps of:
- providing a reactive air braze filler material comprising a metal-ceramic mixture consisting of:
Ag: 50-90 mol%;
CuOₓ: 5-45 mol%;
CoO_{y}: 5-45 mol%
where x ranges between 0.5 and 1.0; and y is 1.0;
- applying the reactive air braze filler material onto a first ceramic surface;
- brazing said first ceramic surface onto a second ceramic or metal surface.

6. Method according to Claim 5, wherein the reactive air braze filler material is applied onto said first ceramic surface to form a metallization layer; and then the metallized ceramic surface is joined to the second surface by brazing with another braze filler alloy.

7. Method according to Claim 6, wherein the reactive air braze filler material is applied in form of a paste, paint, slurry or ink to form said metallization layer on said first ceramic surface with a thickness of about 10-50 µm, preferably of about 20 µm or less.

8. Method according to Claim 6 or 7, comprising a step of activating the reactive air braze filler material applied on the first ceramic surface, said activating step comprising a pre-heating of said first ceramic temperature to a first temperature.

9. Method according to Claim 8, wherein said first temperature ranges between about 800°C and 1300°C, preferably between about 950°C and 1050°C.

10. Method according to Claim 5, wherein the reactive air braze filler material is used in the brazing step, to form a ceramic-ceramic or a ceramic-metal joint.

11. Method according to Claim 10, wherein the reactive air braze filler material is applied onto said first ceramic surface to form a brazing layer, preferably having a thickness of about 100-300 µm.

12. Method according to Claim 10 or 11, wherein the reactive air braze filler material is used in the brazing step in form of foil, sheet, wire, etcetera.

13. Method according to one of Claims 10 to 12, wherein the brazing step is performed at a temperature ranging between about 800°C and 1300°C, preferably between about 950°C and 1050°C.

14. Method according to one of Claims 5 to 13, wherein the reactive air braze filler material is prepared by oxidation of respective metallic powders of said at least one noble metal and said at least two metal oxides, in a preliminary heat-treatment process performed directly in-situ on said first ceramic surface.

## Patentansprüche

1. Reaktives Luftlötfüllmaterial, enthaltend eine Metallkeramikmischung,
**dadurch gekennzeichnet, dass** die Metallkeramikmischung aus
Ag: 50-90 mol%
CuOₓ: 5-45 mol%
CuO_{y}: 5-45 mol%
besteht, wobei x im Bereich zwischen 0,5 und 1,0 liegt und y 1,0 ist.

2. Material nach Anspruch 1, enthaltend einen oder mehrere Zusatzstoffe, um so eine Paste, einen Anstrich, eine Schlämme oder einen Farbstoff zu bilden.

3. Material nach Anspruch 2, enthaltend mindestens ein Bindemittel und/oder mindestens ein Lösemittel und/oder mindestens einen Weichmacher.

4. Material nach Anspruch 1 in Form einer Folie, einer Platte oder eines Drahts.

5. Verfahren für die Metallisierung und Verbindung von keramischen Oberflächen, insbesondere zur Verbindung einer ersten keramischen Oberfläche mit einer zweiten keramischen oder metallischen Oberfläche, welches Verfahren die Schritte enthält:
- Bereitstellen eines reaktiven Luftlötfüllmaterials, das eine Metallkeramikmischung enthält, die aus
Ag: 50-90 mol%
CuOₓ: 5-45 mol%
CuO_{y}: 5-45 mol%
besteht, wobei x im Bereich zwischen 0,5 und 1,0 liegt und y 1,0 ist;
- Auftragen des reaktiven Luftlötfüllmaterials auf eine erste keramische Oberfläche;
- Hartlöten der ersten keramischen Oberfläche auf eine zweite keramische oder metallische Oberfläche.

6. Verfahren nach Anspruch 5, wobei das reaktive Luftlötfüllmaterial auf die erste keramische Oberfläche aufgetragen wird, um eine Metallisierungsschicht zu bilden; und anschließend die metallisierte keramische Oberfläche mit der zweiten Oberfläche durch Hartlöten mit einer weiteren Lötfüllerlegierung verbunden wird.

7. Verfahren nach Anspruch 6, wobei das reaktive Luftlötfüllmaterial in Form einer Paste, eines Anstrichs, einer Schlämme oder einer Farbe aufgetragen wird, um die Metallisierungsschicht auf der ersten keramischen Oberfläche mit einer Dicke von etwa 10-50 µm, bevorzugt etwa 20 µm oder weniger zu bilden.

8. Verfahren nach Anspruch 6 oder 7, enthaltend einen Schritt des Aktivierens des auf die erste Oberfläche aufgetragenen reaktiven Luftlötfüllmaterials, wobei der Aktivierungsschritt ein Vorwärmen der ersten keramischen Temperatur auf eine erste Temperatur umfasst.

9. Verfahren nach Anspruch 8, wobei die erste Temperatur im Bereich zwischen etwa 800 °C und 1300 °C, bevorzugt zwischen etwa 950 °C und 1050 °C liegt.

10. Verfahren nach Anspruch 5, wobei das reaktive Luftlötfüllmaterial in dem Hartlötschritt verwendet wird, um eine Keramik-Keramik- oder eine Keramik-MetallVerbindung zu bilden.

11. Verfahren nach Anspruch 10, wobei das reaktive Luftlötfüllmaterial auf die erste keramische Oberfläche aufgetragen wird, um ein Hartlötschicht zu bilden, die vorzugsweise eine Dicke von etwa 100-300 µm hat.

12. Verfahren nach Anspruch 10 oder 11, wobei das reaktive Luftlötfüllmaterial in dem Hartlötschritt in Form einer Folie, einer Platte, eines Drahts etc. verwendet wird.

13. Verfahren nach einem der Ansprüche 10 bis 12, wobei der Hartlötschritt bei einer Temperatur im Bereich zwischen etwa 800 °C und 1300 °C, bevorzugt zwischen etwa 950 °C und 1050 °C durchgeführt wird.

14. Verfahren nach einem der Ansprüche 5 bis 13, wobei das reaktive Luftlötfüllmaterial durch Oxidation der jeweiligen Metallpulver des mindestens einen Edelmetalls und der mindestens zwei Metalloxide in einem vorausgehenden Wärmebehandlungsprozess, der direkt in situ auf der ersten keramischen Oberfläche ausgeführt wird, hergestellt wird.

## Revendications

1. Matériau d'apport de brasure sous air réactif, comprenant un mélange de métal et de céramique,
**caractérisé en ce que** le mélange de métal et de céramique consiste en :
Ag : 50 à 90 % en mole ;
CuOₓ : 5 à 45 % en mole ;
CoO_{y} : 5 à 45 % en mole
où x est compris entre 0,5 et 1,0 ; et y est égal à 1,0.

2. Matériau selon la revendication 1, comprenant un ou plusieurs additifs afin de former une pâte, une peinture, une boue ou une encre.

3. Matériau selon la revendication 2, comprenant au moins un agent de liaison ; et / ou au moins un solvant et / ou au moins un agent plastifiant.

4. Matériau selon la revendication 1, se présentant sous la forme d'une feuille mince, d'une feuille ou d'un fil.

5. Procédé de métallisation et de collage de surfaces céramiques, en particulier destiné à joindre une première surface céramique et une seconde surface céramique ou métallique ; le procédé comprenant les étapes suivantes :
- fournir un matériau d'apport de brasure sous air réactif, comprenant un mélange de métal et de céramique consistant en :
Ag : 50 à 90 % en mole ;
CuOₓ : 5 à 45 % en mole ;
CoO_{y} : 5 à 45 % en mole
où x est compris entre 0,5 et 1,0 ; et y est égal à 1,0 ;
- appliquer le matériau d'apport de brasure sous air réactif sur une première surface céramique ;
- braser ladite première surface céramique sur une seconde surface céramique ou métallique.

6. Procédé selon la revendication 5, dans lequel le matériau d'apport de brasure sous air réactif est appliqué sur ladite première surface céramique pour former une couche de métallisation ; et ensuite la surface céramique métallisée est jointe à la seconde surface en brasant avec un autre alliage d'apport de brasure.

7. Procédé selon revendication 6, dans lequel le matériau d'apport de brasure sous air réactif est appliqué sous la forme d'une pâte, d'une peinture, d'une boue ou d'une encre, pour former ladite couche de métallisation sur ladite première surface céramique avec une épaisseur comprise entre 10 et 50 µm environ, de préférence d'environ 20 µm ou moins.

8. Procédé selon la revendication 6 ou 7, comprenant une étape d'activation du matériau d'apport de brasure sous air réactif appliqué sur la première surface céramique, ladite étape d'activation comprenant une étape consistant à préchauffer ladite première surface céramique à une première température.

9. Procédé selon la revendication 8, où ladite première température se situe dans une plage comprise entre 800 °C et 1300 °C environ, de préférence entre 950 °C et 1050 °C environ.

10. Procédé selon la revendication 5, dans lequel le matériau d'apport de brasure sous air réactif est utilisé dans l'étape de brasage, afin de former un joint céramique - céramique ou céramique - métal.

11. Procédé selon la revendication 10, dans lequel le matériau d'apport de brasure sous air réactif est appliqué sur ladite première surface céramique pour former une couche de brasage, qui présente de préférence une épaisseur comprise approximativement entre 100 et 300 µm.

12. Procédé selon la revendication 10 ou 11, dans lequel le matériau d'apport de brasure sous air réactif est utilisé dans l'étape de brasage sous la forme d'une feuille masse, d'une feuille, d'un fil, etc.

13. Procédé selon l'une quelconque des revendications 10 à 12, dans lequel l'étape de brasage est exécutée à une température qui se situe dans une plage comprise entre 800 °C et 1300 °C environ, de préférence entre 950 °C et 1050 °C environ.

14. Procédé selon l'une quelconque des revendications 5 à 13, dans lequel le matériau d'apport de brasure sous air réactif est préparé par l'oxydation de poudres métalliques respectives constituées au moins d'un dit métal noble, et au moins de dits deux oxydes métalliques, dans un processus de traitement thermique préliminaire exécuté directement in-situ sur ladite première surface céramique.
